# FASCICULE DE BREVET EUROPEEN

(11) **EP 1 778 732 B1**
(45) Date de publication et mention de la délivrance du brevet: **19.11.2008**
(21) Numéro de dépôt: 05793376.4
(22) Date de dépôt: 28.07.2005
(51) Int. Cl.: C08B 31/00, C08L 3/00, B65C 1/00, G09F 3/10

(54) **AMIDON RETICULE, PARTIELLEMENT SOLUBLE, ET COMPOSITION FILMOGENE LE CONTENANT**
TEILWEISE LÖSLICHE, VERNETZTE STÄRKE UND SIE ENTHALTENDE FILMBILDENDE ZUSAMMENSETZUNG
PARTIALLY-SOLUBLE CROSS-LINKED STARCH AND FILM-FORMING COMPOSITION CONTAINING the SAME

(30) Priorité: 30.07.2004 FR 0408487
(43) Date de publication de la demande: 02.05.2007
(73) Titulaire: ROQUETTE FRERES, 62136 Lestrem (FR)
(72) Inventeur: MENTINK, Léon, F-59100 Roubaix (FR); TRIPIER, Jacques, F-62122 Labeuvrière (FR)
(74) Mandataire: Boulinguiez, Didier
(86) Numéro de dépôt international: PCT/FR2005/001977
(87) Numéro de publication internationale: WO 2006/024756

(56) Documents cités:
- EP-A- 1 148 067
- GB-A- 1 420 392
- US-B1- 6 617 446
- NABESHIMA E H ET AL: "Functional properties of pregelatinized and cross-linked cassava starch obtained by extrusion with sodium trimetaphosphate" CARBOHYDRATE POLYMERS, APPLIED SCIENCE PUBLISHERS, LTD. BARKING, GB, vol. 45, no. 4, août 2001 (2001-08), pages 347-353, XP004247257 ISSN: 0144-8617

## Description

La présente invention a pour objet un nouvel amidon réticulé, partiellement soluble.

Elle a aussi pour objet une composition, comprenant ledit amidon réticulé partiellement soluble selon l'invention, apte à être utilisée dans diverses industries telles que celles des colles, des peintures, des vernis, des films, des enrobages ou des revêtements (« coatings ») et, en particulier, toute composition adhésive utile comme colle d'étiquetage pour bouteilles ou autres objets ou comme colle de sacherie.

Elle concerne encore tout procédé de collage, notamment d'étiquetage ou de confection de sacs, comportant au moins une étape mettant en oeuvre l'amidon selon l'invention ou toute composition le contenant.

La présente invention a plus particulièrement pour objet l'utilisation de l'amidon selon l'invention dans une composition adhésive destinée au collage de matériaux, notamment pour la confection de sacs de petite, moyenne et grande contenance.

Elle concerne encore tout matériau collé, en particulier, tout sac confectionné par tout moyen mettant en oeuvre au moins une composition selon l'invention.

Par « amidon réticulé partiellement soluble » au sens de la présente invention, on entend tout amidon modifié, notamment issu de tubercules, de céréales ou de légumineuses, de préférence, de céréales choisies dans le groupe formé par le maïs, le blé, le riz, le triticale, le seigle, l'orge, l'avoine, présentant, après au moins une opération de réticulation et au moins une opération de solubilisation, une solubilité partielle dans l'eau à 20°C.

On entend par « solubilité partielle dans l'eau à 20°C », une solubilité réduite, notamment inférieure à 20%, mesurée selon un test A. Cette solubilité peut avantageusement se situer dans une gamme très basse, à savoir être comprise entre 1,5 et 5 %.

La procédure, mise en place pour ce test A, réalisé en atmosphère conditionnée à 20°C, consiste en une dispersion de l'amidon à analyser, pesé précisément, dans 200 millilitres d'eau distillée, une homogénéisation de l'ensemble (15 minutes au moyen d'un agitateur magnétique) puis, en une centrifugation pendant 10 minutes à 4000 tours par minute.

Enfin, 25 millilitres du liquide surnageant sont placés dans une étuve à 60°C jusqu'à évaporation totale de l'eau et poids constant.

Après pesée du reliquat, la solubilité est exprimée en pourcentage par rapport à la masse sèche totale de l'amidon dispersé initialement.

Par « procédé de collage » au sens de la présente invention, on entend tout procédé permettant d'abord la préparation et la mise en place des matériaux à assembler et qui prévoit ensuite, dans l'une de ses phases au moins, au moins une étape de collage au moyen d'une composition adhésive, couramment dénommée « colle », en assurant la dépose de ladite colle, l'assemblage et le collage proprement dits dans les conditions requises.

Par exemple, pour le collage de sacs ou d'étiquettes au sens de la présente invention, on utilise généralement une composition adhésive aqueuse, répondant à l'ensemble des critères ci-dessous :
1. Elle doit posséder des propriétés rhéologiques générales adaptées aux diverses étapes, notamment de préparation, de stockage, précédant le processus proprement dit de collage et notamment adaptées aux procédés et dispositifs de plus en plus rapides et performants, de transport, de distribution, de dépose des colles, de positionnement des éléments destinés à être assemblés et, enfin, de recyclage.

En effet, les divers matériels qui assurent les différentes phases du procédé de collage réclament, de façon générale, des colles présentant des caractéristiques précises, notamment en termes d'extrait sec, de niveau de viscosité, de texture, de cohésion et de stabilité.

Dans la mesure où la colle répond de manière satisfaisante à ces différents critères, elle est susceptible de présenter effectivement une bonne aptitude à la distribution, en particulier sur des machines réputées rapides, cela sans désagrément quelquefois rédhibitoire tel que, par exemple, des projections, filaments, bavures ou irrégularités diverses.
2. Elle doit aussi présenter une bonne affinité vis-à-vis du matériau qu'elle doit d'abord mouiller, enduire et pénétrer correctement et cela, le plus généralement, selon des exigences suffisamment précises de temps, température et / ou pression. A ces fins, elle doit, d'une façon générale, présenter d'excellentes aptitudes pour le dépôt d'un film mince, régulier, d'une cohésion suffisante, quel que soit le matériau envisagé en tant que substrat. Si la nature du matériau à coller est le plus souvent cellulosique, cette cellulose a pu être traitée et / ou enduite de diverses matières, en particulier, de polyéthylène ou de corps gras dont l'usage dans le contexte est très répandu, lesdits traitements perturbant régulièrement les données relatives à la distribution, au mouillage et à l'enduction.
3. Elle doit encore posséder des propriétés suffisantes de « tack », c'est-à-dire présenter une capacité suffisante, souvent instantanée et réelle avant toute perte significative en eau de l'adhésif initiant le phénomène de collage à proprement parler, à maintenir correctement positionnés les substrats à assembler, soit dès que le positionnement est réalisé.

Ce « tack » minimum doit ainsi, et tout particulièrement, éviter que lesdits éléments ne soient sujets à une quelconque modification de ce positionnement, notamment par glissement.

A ces fins, elle doit, en d'autres termes, être susceptible d'une forte et rapide adhésion au matériau à l'état humide.

Cette notion est notamment développée dans l'ouvrage « Starch : Chemistry and Technology - Volume II - Industrial Aspects » - R.L. Whistler - E.F. Paschall - Academic Press - 1967 - page 546.
4. Il lui faut développer puis conserver, dans le cadre du maintien rigoureux souhaité des éléments à assembler et de diverses actions telles que, par exemple, celles de la pression et / ou de la température, les propriétés nécessaires à une forte adhésivité et à la résistance du sac la plus élevée, notamment à l'état humide.
5. Elle doit permettre un bon « mûrissement » du collage effectué. Cette notion recouvre la faculté, souvent particulièrement utile, d'évolution bénéfique et rapide du collage dans le temps pour parvenir à la résistance la plus élevée possible, en particulier dans des conditions humides.

De ce point de vue, la pratique conduit à respecter un délai de quelques heures à quelques jours, nécessaire pour parvenir aux propriétés optimales d'adhésivité.
6. Elle doit encore, à des fins courantes de conditionnement d'aliments tels que, par exemple, le sucre, le pain, la farine, satisfaire aux conditions fixées, pour le contact alimentaire, par la réglementation en vigueur ou, mieux, respecter les exigences réclamées pour des produits alimentaires.
7. Enfin, elle doit être biodégradable et respectueuse de l'environnement, et conduire à des sacs facilement recyclables (« re-pulpables »).

D'une façon plus générale, l'homme de l'art est à la recherche de compositions filmogènes, c'est-à-dire aptes à fournir un film mince, de cohésion suffisante, éventuellement adhésif. De telles compositions peuvent être élaborées à partir d'amidon et être d'un usage plus ou moins polyvalent, pour le moins, utilisables largement dans de nombreux domaines d'application tels que ceux des colles en général, des peintures, des encres, des vernis, des films. S'il est vrai que le problème technique est particulièrement aigu en ce qui concerne les colles d'étiquetage de bouteilles et les colles de sacherie, il demeure similaire dans de nombreux autres cadres d'utilisation.

En particulier, et de façon très courante, il est exigé que les compositions filmogènes, éventuellement adhésives, répondent à des critères d'aptitude au contact alimentaire de plus en plus sévères.

Avec l'accélération des cadences des machines, de leur vitesse autant que de la rapidité des transferts, il est impératif de mettre en place des compositions filmogènes, éventuellement adhésives, qui permettent un collage ou une adhérence suffisamment rapides en générant peu ou pas de projections sur les systèmes d'enduction, notamment par rouleaux encreurs ou par clichets.

Ces notions doivent conserver leur pleine valeur quelle que soit la nature des matériaux, qu'il s'agisse de les coller, d'y adhérer ou de les revêtir, notamment celle des papiers à assembler.

Les réponses techniques et leur qualité doivent être établies dans le cadre de coûts acceptables et de disponibilités convenables de la matière première.

Le plus souvent, on souhaite disposer de compositions filmogènes qui sont mises en oeuvre « à froid », c'est-à-dire sans ou avec peu d'apport calorique.

Les compositions commerciales actuelles mises en oeuvre à froid sont souvent élaborées à partir d'amidons se trouvant dans un état de solubilité importante, généralement supérieure à 30%, voire quasi-totale, notamment obtenue par prégélatinisation sur tambours sécheurs, tel que ladite composition présente une phase soluble de viscosité élevée à très élevée.

De telles compositions ont en commun de présenter une proportion d'eau libre (Aw) faible à très faible, déterminant notamment une pénétration lente dans le papier et la nécessité d'un séchage long, préjudiciables.

De façon générale, les matières amylacées solubles concernées les plus courantes, issues de tubercules ou de céréales, sont susceptibles de présenter un bon nombre des propriétés souhaitées pour la confection de sacs et sont largement utilisées, notamment, dans le cadre des deux opérations les plus répandues dites et connues de l'homme de l'art sous les noms de collage longitudinal et de collage de fond.

Ces différents aspects et notions sont notamment développés, essentiellement pour l'amidon de mais, dans l'ouvrage « Industrial Uses of Starch and its Derivatives », de J. A. Radley - Applied Science Publishers - 1976 - pages 33 et 34.

Un autre ouvrage de référence, « Starch : Chemistry and Technology - Second Edition - Industrial Aspects »-R.L. Whistler - J.N. Bemiller - E.F. Paschall - Academic Press - 1984, aborde plus précisément, en pages 603 et 604, les règles essentielles qui conduisent à l'utilisation, d'une part, après cuisson obligatoire, de dextrines blanches et d'amidons fluidifiés pour le collage longitudinal (« Side-Seam Adhesives ») et, d'autre part, d'amidons non modifiés ou fluides, prégélatinisés, pour le collage de fond (« Bottom-Paste Adhesives »).

Les amidons les plus utilisés et, notamment, parmi ceux-ci, la fécule de pomme de terre ou de manioc, l'amidon de blé ou de mais, recèlent, sans modification appropriée, quelques inconvénients.

Dans les opérations de collage de sacs, qu'il soit longitudinal ou de fond, il devient en effet particulièrement malaisé, avec les amidons de céréales ou de tubercules, et compte tenu, notamment, des aspects déjà évoqués de pénétration et séchage lents, de respecter les exigences de machines toujours plus rapides, performantes, initiant des sollicitations et des contraintes dynamiques toujours plus élevées pour la composition adhésive, tout en possédant les propriétés de collage requises et énoncées aux points 1 à 5 ci-dessus.

En réponse à ces nécessités, les amidons issus de tubercules, comme la fécule de pomme de terre, qu'ils soient hydrolysés ou non, modifiés ou non, conduisent généralement à des compositions présentant de faibles cohésions et génèrent trop souvent des irrégularités dans les dépôts et des projections sur machine importantes.

Certaines tentatives ont permis de limiter les effets les plus néfastes. Parmi celles-ci, l'une des plus récentes est décrite dans la demande de brevet internationale WO 02/088188, qui propose de réticuler la fécule de pomme de terre en phase sèche et à basse température au moyen d'agents de réticulation tels que des résines urée-formol, le trimétaphosphate de sodium ou la dihydroxyacétone (DHA).

En tout état de cause, la fécule de pomme de terre, modifiée par ces moyens, ne peut pas être mise en oeuvre à froid. En outre, après cuisson, elle accentue sensiblement, à la fois, les inconvénients majeurs de forte viscosité et d'un prix élevé, dû à la réaction et à des approvisionnements devenus difficiles, essentiellement, de par les coûts d'extraction ainsi que par la réglementation spécifique qui lui est appliquée.

La réponse des amidons de céréales à ces mêmes nécessités est toute différente. En effet et à l'inverse, de telles matières, notamment les amidons de maïs, conduisent, sous forme de matières solubles et de solutions colloïdales, à des compositions de forte cohésion, souvent excessive. Cette forte cohésion, dans les conditions de circulation de colle, génère des zones où la composition épaissit fortement et évolue vers la solidification, par élévation de l'extrait sec et / ou absence de cisaillement.

La seule opération de réticulation, pratiquée sur des amidons de céréales, notamment, de maïs ou de blé, s'avère inadaptée ou, pour le moins, insuffisante dans la mesure où, isolée, elle tend à accentuer ces défauts considérés, le plus souvent, comme rédhibitoires.

D'autres solutions peuvent consister en l'appel à des amidons, de tubercules et de céréales, le plus souvent modifiés chimiquement et / ou physiquement, présentant une richesse élevée en amylopectine.

En effet, les amidons riches en amylopectine, comme les amidons de mais cireux, conduisent à des compositions très stables, au séchage difficile, qui développent, en relation directe avec une cohésion de colle insuffisante (caractère filant), des propriétés adhésives globalement assez faibles, notamment en termes de résistance dans des conditions humides.

De façon parallèle, les défauts de comportement sont aussi très importants, avec les amidons de céréales ou de tubercules, lorsque leur teneur en amylose est élevée.

Ils sont très souvent rédhibitoires, notamment en termes de rhéologie et de stabilité, en raison d'une très forte et rapide évolution de la viscosité.

L'article « Tack and bonding strength of carbohydrate-based adhesives from different botanical sources » de F.N. Emengo, S.E.R. Chukwu, J. Mozie - International Journal of Adhesion and Adhesives vol. 22 N°2 (2002) p.93 - 100, par exemple, envisage d'autres amidons comme ceux issus de la patate douce, de l'igname, du manioc, du riz, de la graine de soja.

En tout état de cause, l'impuissance dans laquelle on se trouve à résoudre ou même à réduire les insuffisances foncières de ces amidons de céréales ou de tubercules a souvent conduit à des propositions coûteuses et complexes, notamment liées aux adjonctions d'agents synthétiques complémentaires ou aux modifications chimiques envisagées et d'autant plus discutables qu'elles ne respectent pas, en général, l'environnement et sa qualité.

On peut citer, par exemple, dans cet ordre d'idée, la demande de brevet japonais JP 63-112673 ou la demande de brevet internationale WO 92/10554 qui décrivent des compositions adhésives comprenant amidons modifiés et polymères synthétiques ou la demande de brevet japonais JP 03-275701 qui décrit la réaction de l'amidon avec un N-hydroxyméthyl stéarate amide.

On peut aussi citer le brevet US 3.844.807 qui décrit l'association d'un premier amidon hydrolysé, d'un second amidon non hydrolysé, d'un troisième amidon hydroalkylé, d'un premier sel inorganique de base faible et d'acide fort, d'un second sel inorganique de base forte et d'acide fort et d'un agent surfactant. Une telle solution, par sa complexité, traduit bien l'embarras et la perplexité devant les problèmes posés.

La demande de brevet internationale WO 00/66660 constitue un autre exemple de solutions complexes en associant, pour constituants majeurs, acétate de polyvinyle, dextrine et amidon natif mais aussi, des composants tels qu'un éther de cellulose, un plastifiant spécifique de l'amidon, un autre destiné à l'acétate, dans le cadre de formulations exemplifiées comportant une ) dizaine d'ingrédients.

Dans de très nombreux cas d'utilisation, les insuffisances conduisent à préconiser l'association de dérivés d'amidon, de polymères synthétiques solubles, comme les alcools de polyvinyle, et / ou de polymères synthétiques en émulsion ou en dispersion comme, par exemple, les émulsions vinyliques ou acryliques.

Ainsi, au vu de ces différents aspects et insuffisances, la Société Demanderesse considère qu'il existe un besoin non satisfait de présenter des compositions à base d'amidon constituant des solutions techniques d'intérêt permettant de:
- répondre à l'élaboration de compositions filmogènes ou adhésives par l'appel à des amidons peu coûteux et aisément accessibles, à mettre en oeuvre à froid,
- présenter une solution rhéologique adaptée, notamment en termes de viscosité apparente, de comportement au cisaillement, d'absence de projections sur la machine, même rapide,
- maintenir l'évolution de la viscosité dans les capacités de stockage ou de recyclage, notamment lors de changement de production ou d'arrêts éventuellement prolongés, dans des limites acceptables par l'homme de l'art,
- interdire l'apparition de solidifications ou d'épaississements exagérés, néfastes à la conduite de l'opération et à la qualité du résultat,
- offrir un caractère filmogène adapté à la dépose, quels que soient le support et les éventuels traitements préalables, c'est-à-dire apte à l'obtention d'un film mince et régulier, présentant une cohésion suffisante,
- permettre un bon mouillage, ainsi qu'une forte adhésion du film sur le support, même à l'état humide,
- autoriser, si nécessaire, une pénétration rapide et suffisante dans le support, ainsi qu'un séchage suffisamment bref,
- développer une résistance mécanique du film à l'état sec,
- accéder, éventuellement, à une résistance suffisante du film à l'action de l'eau, et à sa permanence.

De façon synthétique, on peut affirmer qu'il existe une première nécessité à mettre en place des compositions aqueuses à base d'amidon qui puissent satisfaire à toutes les exigences présentées par les matériels modernes, notamment en termes de rhéologie et de performances, qui soient simples de mise en oeuvre, qui soient d'un coût raisonnable et, parallèlement, faciles d'accès en termes d'approvisionnement, de mise en oeuvre et de réglementation, et écologiquement intéressante.

I1 existe une seconde nécessité, dans de nombreux cas, à élaborer des compositions qui soient adhésives et susceptibles de développer des joints de colle de bonne résistance à l'eau et qui fassent appel à des quantités suffisamment réduites de résines, notamment.

Certains de ces aspects ont été étudiés il y a prés de 30 ans dans le brevet GB 1 420 392, dont les enseignements ne sont donc pas adaptés aux contraintes actuelles, notamment techniques et réglementaires. Ce document préconise la préparation de compositions adhésives ou filmogènes à base de fragments d'amidon réticulé par un agent bi-ou polyfonctionnel. Ces fragments, obtenus sur extrudeuse, présentent cependant une granulométrie ultrafine puisque leur diamètre moyen est au plus égal à 10 µm (en pratique entre 2 et 4 µm) et que moins de 15 % (en pratique de 0,5 à 4,4 %), en poids, desdits fragments) ont un diamètre supérieur à 10 µm. Ces particules ultrafines présentent donc des risques industriels en termes d'explosivité ou d'inhalation. En outre, la finesse de ces fragments fait que les compositions résultantes présentent une viscosité relativement faible, à savoir inférieure à 125 centipoises ou mPa.s (en pratique de 46 à 95 centipoises ou mPa.s) pour une concentration de 10 %.

Il est dit que de manière générale la matière amylacée réticulée/fragmentée présente une solubilité inférieure à 20 %. Cependant, dans la pratique des exemples de ce brevet GB 1 420 392, cette solubilité se situe toujours à une valeur supérieure à 5 %, à savoir entre 6,5 et 11 %, et donc dans une gamme que l'on peut qualifier de relativement moyenne dans le domaine technique ici considéré.

La conjugaison de ce niveau de solubilité et de la granulométrie ultrafine soulignée précédemment favorise une vitesse d'hydratation très rapide et donc la formation de grumeaux. Elle est donc préjudiciable à une mise en solution convenable de ces compositions.

Les caractéristiques, notamment rhéologiques, de ces compositions font qu'elles ne sont donc pas totalement adaptées aux contraintes techniques actuelles liées à des procédés et dispositifs industriels de plus en plus rapides et performants de préparation, transport, distribution et dépose des colles ou de positionnement des éléments destinés à être assemblés. En particulier, ces compositions ne permettent généralement pas d'être préparées rapidement sans formation de grumeaux (cf supra) et d'être distribuées sur des machines actuelles, réputées rapides, sans poser des problèmes tels que projections, filaments, bavures ou autres irrégularités.

De plus, les matières premières utilisées préférentiellement dans ce brevet GB 1 420 392 consistent en des amidons facilement fragmentables, de structure granulaire relativement peu compacte : pomme de terre, manioc, sagou et certaines céréales particulières, à hautes teneurs en amylopectine (céréales waxy). Outre le fait que de telles matières premières préférées sont assez peu disponibles, sont chères et/ou produites sous quotas, on observe qu'en pratique, pour de telles matières, le taux de mise en oeuvre d'agent réticulant reste relativement peu élevé, à savoir au maximum de 0,5 % quand il s'agit d' épichlorhydrine ou de 1 % quand il s'agit d' oxychlorure de phosphore. Ces taux sont d'ailleurs encore significativement moins élevés (respectivement 0,3 et 0,5 %) quand la matière première consiste en amidon issu de céréales autres que les céréales waxy, matière première non préférée car de structure très compacte.

En suite de quoi, ce document n'envisage pas véritablement de réticuler des amidons de céréales standard avec un composé phosphoré comme l'oxychlorure de phosphore, a *fortiori* avec des taux supérieurs à 1 % d'un tel composé.

Or, il est du mérite de la Demanderesse d'avoir établi que des compositions répondant à l'ensemble des contraintes actuelles, notamment techniques et réglementaires, peuvent être élaborées, de façon surprenante et inattendue, à partir d'un amidon ou d'un mélange d'amidons réticulés partiellement solubles sélectionnés à la fois en termes de solubilité, de viscosité et de granulométrie , issus de tubercules mais aussi, en particulier, de céréales et / ou de légumineuses, par l'emploi d'un agent de réticulation particulier pour conférer, entré autres, non seulement une texture et une viscosité adaptées mais aussi une totale conformité à la réglementation en termes de contact alimentaire.

De façon plus avantageuse, lesdits amidons sont choisis parmi les amidons de céréales et, de préférence, choisis dans le groupe formé par les amidons de maïs, de blé, de seigle, d'orge, d'avoine et en particulier, consistent en amidons de maïs, de préférence autre que waxy.

Ainsi, la présente invention a trait à un amidon réticulé partiellement soluble, caractérisé en ce qu'il est réticulé en utilisant un agent de réticulation choisi dans le groupe comprenant les composés phosphorés, les acides organiques et dérivés, et leurs mélanges et en ce qu'il présente, dispersé dans l'eau à 20°C, a) une solubilité, selon le test A décrit dans l'exemple 1, au plus égale à 20%, de préférence comprise entre 0,5 et 15%, de préférence encore, comprise entre 1,0% et 10%, b) une viscosité Brookfield comprise entre 500 et 5000 mPa.s à une concentration comprise entre 10 et 20% de matières sèches (% MS), et c) une granulométrie, mesurée sur granulomètre à diffraction laser, telle que 50 %, en volume, de ses particules ont une taille inférieure à 60 µm et au moins égale à 10 µm, de préférence une taille comprise entre 10 et 30 µm.

Il est en outre du mérite de la Demanderesse d'avoir déterminé également qu'une composition filmogène, éventuellement adhésive, caractérisée en ce qu'elle contient au moins un amidon, réticulé et partiellement soluble, conforme à l'invention, permettait, de par le fait de ses caractéristiques de solubilité, de viscosité et de granulométrie, de répondre à l'ensemble des paramètres conditionnant le degré de satisfaction de l'homme de l'art, confronté à la nécessité d'assurer, par exemple, un bon collage de sacs ou d'étiquettes, notamment selon des exigences très variables, en particulier en termes de cadences des machines.

La composition filmogène éventuellement adhésive est, de préférence encore, caractérisée en ce qu'elle comprend un amidon réticulé, rendu partiellement soluble par extrusion et, de préférence, issu de céréales, de préférence encore, issu de l'amidon de mais.

La Demanderesse a encore constaté, après de nombreux travaux, que, de manière surprenante et inattendue, l'amidon réticulé conforme à l'invention pouvait avantageusement être rendu partiellement soluble par extrusion dans des conditions de température et d'humidité élevées, c'est-à-dire des températures au moins égales à 100°C et des teneurs totales en eau supérieures à 10% par rapport à l'amidon sec.

Par « amidon réticulé » au sens de la présente invention, on entend tout amidon soumis à une opération au moins de réticulation susceptible d'être conduite par tout moyen connu de l'homme de l'art, notamment en phase aqueuse, selon les principes essentiels, notamment évoqués dans l'ouvrage « Starch : Chemistry and Technology - Second Edition - Industrial Aspects » - R.L.- Whistler - J.N. Bemiller - E.F. Paschall - Academic Press - 1984, pages 324 à 326.

Elle peut être aussi réalisée en phase sèche comme décrit, par exemple, dans la demande de brevet internationale WO 02/088188 ou, éventuellement, en phase semi-sèche.

Par « amidon extrudé » au sens de la présente invention, on entend tout amidon soumis à un passage dans une machine d'extrusion, qu'elle soit de type « mono-vis » ou « bi-vis », laquelle permet d'exercer une action suffisamment intense, tant thermique que de cisaillement, permettant notamment d'accéder à la solubilité partielle désirée.

L'agent de réticulation peut être choisi parmi les agents reconnus, aptes au contact alimentaire au sens de la réglementation européenne, notamment parmi ceux cités dans « Starch : Chemistry and Technology - Second Edition - Industrial Aspects », dans les pages 324 à 326. Conformément à l'invention, l'agent de réticulation est choisi dans le groupe comprenant les composés phosphorés, les acides organiques et dérivés, et leurs mélanges.

De préférence, l'agent de réticulation est un phosphate, de préférence un trimétaphosphate, l'oxychlorure de phosphore, les polyacides organiques, leurs sels et anhydrides, en particulier, les adipates et les citrates, et les divers mélanges de ces composés.

De manière très avantageuse l'agent de réticulation consiste en trimétaphosphate de sodium.

En particulier, des conditions de réticulation judicieusement choisies, notamment en termes de degré de substitution (D.S.), associées à des conditions d'extrusion adaptées, conduisent préférentiellement à des amidons modifiés autorisant la formulation et la déclinaison de diverses compositions selon l'invention qui sont susceptibles de présenter, sous forme de solution aqueuse à une concentration souhaitée, voisine de 15 à 20% de matières sèches, et à 20°C, une viscosité comprise entre 2000 et 3000 mPa.s, niveau désiré et compatible notamment avec les équipements modernes de confection de sacs.

Il est plus particulièrement estimé que les niveaux de réticulation souhaités sont élevés. Ils correspondent, par exemple, à une mise en oeuvre du trimétaphosphate de sodium, utilisé comme agent de réticulation, au moins égale à 0,5%, de préférence supérieure, exprimée en matière commerciale par rapport à la matière amylacée commerciale.

De manière remarquable, notamment en regard des enseignements du brevet GB 1 420 392 précité, le taux de mise en oeuvre de l'agent de réticulation, qu' il s'agisse ou non de trimétaphosphate de sodium, peut avantageusement être supérieur à 1% et ce, y compris pour des amidons issus de céréales autres que des céréales waxy ou issus de légumineuses.

Ce taux de mise en oeuvre peut notamment être compris entre 1,1% et 2 %.

Selon une variante, la composition selon l'invention est caractérisée en ce que l'amidon qu'elle contient, de préférence issu de céréales, destiné à être réticulé et extrudé, est un amidon modifié obtenu par au moins une modification complémentaire choisie dans le groupe constitué par l'hydrolyse enzymatique, l'hydrolyse acide, les modifications thermiques et thermomécaniques, les modifications chimiques, en particulier l'oxydation, l'estérification, l'éthérification et la réticulation.

Plus précisément, la composition selon l'invention est avantageusement caractérisée en ce que l'amidon subit, préalablement à la réticulation et à l'extrusion, au moins une modification chimique.

Ladite modification chimique peut, notamment, consister en une réaction d'oxydation, d'acétylation, de carboxyalkylation, notamment de carboxyméthylation, de sulfonation, de sulfatation, de succinylation, de cyanoéthylation, de cationisation, d'hydroxyéthylation, d'hydroxypropylation, ou relative à une réticulation préalable.

Selon une autre variante, éventuellement associée à la précédente, l'amidon réticulé et extrudé de la composition selon l'invention, peut être soumis à d'autres modifications physiques, notamment antérieures à la réticulation et / ou à l'extrusion, telles que, par exemple, les opérations thermiques définies par les locutions « Hot Moisture Treatment » ou « Annealing ».

En tout état de cause, l'amidon, réticulé et extrudé, éventuellement modifié chimiquement et / ou physiquement, se présente, après broyage, sous la forme de particules de faible solubilité dans l'eau. Celle-ci, mesurée selon le test A décrit dans l'exemple 1, est inférieure à 20% et généralement comprise entre 0,5 et 15% et, de préférence, comprise entre 1,0 et 10%. Plus avantageusement, elle est comprise entre 1,0 et 7% et, mieux encore, comprise entre 1,5 et 5%.

La faible solubilité aqueuse de l'amidon réticulé et extrudé génère, à la dispersion dans l'eau, une composition dans laquelle la matière amylacée se trouve essentiellement à l'état de particules dispersées d'amidon amorphe en amas et de grains d'amidon issus de granules gonflés et fragmentés.

Ces particules sont, le plus généralement, de taille, mesurée sur granulomètre à diffraction laser après dispersion dans l'eau à 20°C, comprise entre 1 et 300 microns, de préférence comprise entre 5 et 200 microns.

La granulométrie ultrafine décrite et préconisée par la demande de brevet GB 1 420 392 précitée, centrée autour de 2 à 4 microns, essentiellement inférieure à 10 microns, appartient au domaine le plus bas.

En revanche, selon la présente invention, la granulométrie de l'amidon réticulé et extrudé est significativement supérieure à la granulométrie ultrafine décrite et préconisée par le brevet GB 1 420 392. Conformément à la présente invention, la granulométrie de l'amidon réticulé est telle que 50 %, en volume, de ses particules ont une taille inférieure à 60 µm et au moins égale à 10 µm, de préférence une taille comprise entre 10 et 30 µm.

Cette granulométrie (d50) peut notamment se situer entre 11 et 25 µm.

Il est encore constaté que, dans les mêmes conditions , une proportion importante des particules, c'est-à-dire 90% (d₉₀) de l'amidon selon l'invention, présente de préférence, une taille inférieure à 80 microns, de préférence, inférieure à 60 microns et de préférence encore, inférieure à 40 microns.
Selon une variante avantageuse, l'amidon réticulé partiellement soluble conforme à l'invention est en outre caractérisé en ce qu'il présente une granulométrie, mesurée sur granulomètre à diffraction laser, telle que 90 %, en volume, de ses particules ont une taille inférieure à 40 µm mais au moins égale à 10 µm, de préférence une taille comprise entre 10 et 35 µm.

Cette granulométrie (d90) peut en particulier se situer entre 15 et 35 µm.

L'amidon réticulé et extrudé selon l'invention présente en outre, dans des conditions de dispersion dans l'eau à 20°C pendant 20 minutes sous agitation à 1500 tours par minute, une viscosité Brookfield comprise entre 500 et 5000 mPa.s à une concentration comprise entre 10 et 20% de matières sèches (% MS).

Plus avantageusement, cette gamme de viscosités est atteinte pour des concentrations comprises entre 11 et 16%MS ou mieux, pour des concentrations comprises entre 12 et 15%MS.

Ces viscosités sont significativement supérieures à celles préconisées dans le brevet GB 1 420 392 précité.

Ces appréciations sont susceptibles d'être assorties d'autres mesures réalisées, après dispersion similaire, sur la Coupe Ford n°8.

De telles mesures, effectuées sur l'amidon selon l'invention, sont comprises entre 10 et 60 secondes, de préférence, comprises entre 15 et 50 secondes, de préférence encore comprises entre 20 et 40 secondes.

Les compositions selon l'invention, élaborées à partir d'amidon réticulé et extrudé répondant à ces caractéristiques, satisfont l'ensemble des contraintes et répondent aux objectifs fixés.

On constate, plus particulièrement, que de telles compositions selon l'invention :
- sont obtenues à partir d'une matière amylacée peu coûteuse, aisément accessible, disponible et facile à mettre en oeuvre, même à froid,
- sont très peu sujettes à provoquer des projections sur machine, même à de très hautes cadences de production de sacs, par exemple, 200 à 250 sacs à la minute,
- permettent un bon collage de tous les types de papiers couramment utilisés aux fins de confection de sacs et,
- conviennent, de par le choix spécifique de l'agent de réticulation, au contact alimentaire selon les réglementations en vigueur émises par les instances BGW et FDA habilitées.

Selon de multiples variantes possibles, en raison de l'excellente compatibilité présentée et dans le but de parfaire la composition, l'amidon réticulé et extrudé, peut être associé à d'autres amidons ou, bien que ce ne soit pas là la solution préférée, à d'autres polymères, solubles, tels que, par exemple, les alcools de polyvinyle, les dérivés de cellulose, tels les méthyl- ou les carboxyméthyl-celluloses, les alginates et / ou diverses gommes. Il peut aussi être mélangé à des polymères en dispersion comme, par exemple, les latex de toutes natures.

La prise en compte de considérations souvent imposées à l'homme de l'art peuvent l'amener à apporter divers agents fonctionnels supplémentaires à la composition tels que des agents de rhéologie, notamment épaississants ou viscosifiants, des plastifiants, des stabilisants comme, par exemple, le savon de Marseille ou un alcool gras, des colorants, des résines hydrophobes, des agents de complexation comme, par exemple, le borax et / ou de réticulation de l'amidon, mais aussi des charges ou des pigments, minéraux, comme le carbonate de calcium et les kaolins ou encore, organiques, en particulier, de l'amidon sous forme granulaire.

La composition selon l'invention convient ainsi, d'une façon plus générale et non limitative, au collage des sacs de petite, moyenne et grande contenance ou d'étiquettes.

La composition filmogène selon la présente invention permet ainsi d'accéder à un procédé de collage amélioré, en toute généralité, notamment de par le fait que les compositions selon l'invention sont d'excellente qualité et se prêtent particulièrement bien à leur préparation.

Plus particulièrement, et comparativement aux produits de l'art antérieur, les compositions selon l'invention bénéficient, du fait même de la faible solubilité de l'amidon qui y intervient, présentent une proportion d'eau libre (Aw) élevée à très élevée, autorisant une pénétration rapide dans le support et / ou un séchage rapide.

C'est notamment le cas de celles présentant une solubilité aqueuse comprise entre 1,5 et 5 %, i.e une solubilité encore inférieure à celles décrites dans les exemples du brevet GB 1 420 392 précité.

De par leurs caractéristiques, y compris de granulométrie et de viscosité, les compositions selon l' invention présentent un certain nombre d'avantages industriels par rapport à celles mises en pratique selon ledit brevet GB et sont mieux adaptées aux contraintes techniques d'aujourd'hui. En particulier, de par sa vitesse d'hydratation adaptée et sa faculté à être dispersée aisément, toute composition selon l'invention peut, elle, être préparée rapidement sans formation de grumeaux et/ou être distribuée sur des machines actuelles, réputées rapides, sans poser des problèmes tels que projections, filaments, bavures ou autres irrégularités.

De par sa granulométrie qui n'est pas ultrafine, la composition selon l'invention est beaucoup moins apte à générer des problèmes d'explosion ou d'inhalation que celles mises en pratique selon ledit brevet GB.

La composition filmogène selon l'invention permet, en conséquence, d'accéder à un matériau collé particulièrement satisfaisant, en particulier, une étiquette ou un sac de petite, moyenne ou grande contenance.

L'utilisation même de la composition filmogène selon l'invention est particulièrement satisfaisante, notamment pour le collage, mais convient aussi particulièrement bien à la formulation de peintures, de vernis, de films, d'enrobages ou de revêtements (« coatings »).

La composition filmogène selon l'invention peut encore comprendre des agents conservateurs et / ou des agents plastifiants tels que des polyols, l'urée et ses dérivés, des sels d'acides organiques comme les sels de l'acide lactique.

Les différents aspects de la présente invention, relatifs à la formulation et à l'élaboration de compositions filmogènes adhésives usuelles, vont être décrits de façon plus détaillée à l'aide des exemples qui suivent et qui ne sont aucunement limitatifs.

### Exemple 1 :

Une fourniture d'amidon de maïs est, dans une première étape, réticulée en phase lait, avec 1,2% de trimétaphosphate de sodium, exprimé en matière commerciale par rapport à l'amidon commercial.

Cet agent réticulant est choisi spécifiquement en raison de son autorisation pour usage alimentaire.

Dans une seconde phase, il est soumis à une opération d'extrusion, sur une extrudeuse de marque CLEXTRAL, affichant une vitesse de rotation de 345 tours par minute.

Filière, teneur en eau et températures des fourreaux, sont définis de façon à atteindre, après broyage et mise en solution, l'objectif de viscosité, de solubilité et de granulométrie.

Pour s'en assurer, divers échantillons sont prélevés en cours de fabrication. Après broyage, des colles sont confectionnées à 15% de matières sèches, sous agitation à 1500 tours par minute pendant 20 minutes.

Les valeurs relevées sont :

| Prise | T°C | Eau | Solubilité aqueuse à 20°C (%) | Viscosité Brookfield mPa.s | d₅₀ | d₉₀ |
|---|---|---|---|---|---|---|
| 1 | 100/185 | 65 l/h | 3,3 | 3200 | 16,7 | 31,2 |
| 2 | | | 3,0 | 3000 | 16,6 | 19,5 |
| 3 | | | 3,1 | 3500 | 17,3 | 31,8 |
| E | | | | | 18,4 | 64,3 |

La solubilité aqueuse est mesurée selon le test A tel que décrit précédemment :
La procédure, mise en place pour ce test A, réalisé en atmosphère conditionnée à 20°C, consiste en une dispersion de l'amidon à analyser, pesé précisément, dans 200 millilitres d'eau distillée, une homogénéisation de l'ensemble (15 minutes au moyen d'un agitateur magnétique) puis, en une centrifugation pendant 10 minutes à 4000 tours par minute.
Enfin, 25 millilitres du liquide surnageant sont placés dans une étuve à 60°C jusqu'à évaporation totale de l'eau et poids constant.
Après pesée du reliquat, la solubilité est exprimée en pourcentage par rapport à la masse sèche totale de l'amidon dispersé initialement.

d₅₀ et d₉₀ désignent les dimensions maximales de particules, mesurées sur granulomètre à diffraction laser, après dispersion dans l'eau à 20°C, correspondant aux proportions de population concernées, respectivement 50 et 90% du total en volume.

Un produit E de l'art antérieur, à base de fécule de pomme de terre, réticulé à l'épichlorhydrine, connue pour ne pas convenir à un contact alimentaire, a été considéré comparativement de ce point de vue.

La comparaison des valeurs de d₅₀ et d₉₀ traduit le fait de répartitions, en termes de granulométrie, beaucoup plus serrées dans le cas des produits selon l'invention. La taille des particules est en effet essentiellement comprise entre 10 est 60 microns, tout particulièrement entre 10 et 35 microns, alors que le produit E présente des particules réparties, approximativement, entre 2 et 140 microns ainsi qu'un d90 beaucoup plus élevé, largement supérieur à 50 µm.

Exemple 2 : Dans un second temps, l'ensemble du produit fabriqué est broyé et homogénéisé et des mesures sont réalisées selon la même procédure sur un échantillon moyen Em, à diverses matières sèches.

| MS (%) | Viscosité Brookfield à 20°C(mPa.s) | | | |
|---|---|---|---|---|
| | Temps 0 | 1 heure | 24 heures | 48 heures |
| 13,5 | 800 | | | |
| 14,4 | 1500 | | | |
| 14,85 | 2000 | 2600 | 3600 | 4200 |
| 15,3 | 4000 | 6400 | 10000 | 13000 |

On considère que ces données, relatives à une matière homogène, sont convenables et qu'elles correspondent à l'objectif de viscosité visé, notamment en termes d'évolution de celle-ci dans le temps.

### Exemple 3 :

L'échantillon moyen Em est comparé selon la procédure de l'exemple 1, à deux niveaux de matières sèches, considérés comme représentatifs, en termes de stabilité de la viscosité de la colle, au produit E de l'art antérieur, réticulé à l'épichlorhydrine :

| | Concentration (en % MS) | Viscosités à 20°C | |
|---|---|---|---|
| | | Brookfield (mPa.s) | Ford n°8 (secondes) |
| Em | 16 | 1950 | 25 |
| | 16,6 | 3100 | 38 |
| E | 16 | 2200 | 33 |
| | 16,6 | 3600 | 55 |

Les viscosités et comportements rhéologiques, entre composition de l'art antérieur et composition selon l'invention, sont tout à fait voisins.

Il n'empêche que le produit Em conforme à l'invention est utilisable en contact alimentaire, tout en étant de source disponible.

### Exemple 4 :

On met en place un test de vieillissement accéléré sur l'échantillon moyen Em en le plaçant pendant 20 jours à l'étuve, soit à 20°C, soit à 40°C. On pratique ensuite, sur les deux échantillons ainsi obtenus, les mesures de viscosité à deux niveaux de matières sèches représentatifs :

| | Stockage | Concentration (%MS) | Viscosité Brookfield à 20°C(mPa.s) | | | Coupe Ford n°8 (en secondes) |
|---|---|---|---|---|---|---|
| | | | T=0 | Au collage | A 24 heures | |
| Em1 | 20°C | 15,3 | 3200 | 5800 | 7200 | 40 |
| Em2 | 40°C | 15,3 | 2900 | 5400 | 7000 | 38 |
| Em1 | 20°C | 14,85 | 2500 | 3500 | 4700 | 33 |
| Em2 | 40°C | 14,85 | 2450 | 3500 | 4800 | 32 |

Les valeurs ne sont pas sensiblement modifiées par un stockage prolongé de la poudre à une température relativement élevée.

De même, les évolutions en colles, à 48 heures, ne présentent pas de caractère rédhibitoire et conviennent à l'homme de l'art.

### Exemple 5 :

La comparaison est reprise, cette fois en termes de développement de l'adhésivité sur appareil FIPAGO. Le principe de ce test consiste à apprécier l'évolution dans le temps de la résistance à l'arrachage développée par la colle testée entre deux papiers.

L'un est posé sur un support fixe, l'autre est fixé à un bras articulé, l'un et l'autre correspondant à des échantillons d'un même papier, de dimensions standard 20cm x 6cm, et dont les caractéristiques principales sont :
- grammage : 66g/m²,
- valeur de Collage Cobb : 19 environ,
- Porosité AFNOR : 7,6 environ,
- Cohésion interne (Scoot-Bond) : 550 environ.
La valeur 100 correspond à l'absence de décollement et la valeur 0 à un décollement immédiat.

| | Adhésivité FIPAGO | | | | | | |
|---|---|---|---|---|---|---|---|
| Temps (en secondes) | 10 | 20 | 30 | 40 | 50 | 60 | 90 |
| Em1 - 15,3%MS | 2 | 4 | 8 | 14 | 18 | 21d | 35a |
| Em2 - 15,3%MS | 2 | 4 | 8 | 18d | 20 | 34a | |
| Em1 - 14,85%MS | 2 | 4 | 7 | 12 | 16 | 18d | 25da |
| Em2 - 14,85%MS | 2 | 4 | 8 | 14 | 18 | 22d | 45a |

| | | | | | | | |
|---|---|---|---|---|---|---|---|
| d : décollement a : arrachage | | | | | | | |

Le développement de l'adhésivité est de nature, dans les quatre cas considérés, à satisfaire l'homme de l'art dans le cadre de la formulation de colles de sacherie grande contenance.

Il a été démontré par des tests que de telles compositions à base d'amidon réticulé partiellement soluble ne génèrent, quasiment, aucune projection sur machine de fabrication de sacs, contrairement aux amidons de l'art antérieur, de solubilité aqueuse supérieure à 30%, obtenus par prégélatinisation sur tambours sécheurs.

## Revendications

1. Amidon réticulé partiellement soluble,
**caractérisé en ce qu'**il est réticulé en utilisant un agent de réticulation choisi dans le groupe comprenant les composés phosphorés, les acides organiques et dérivés, et leurs mélanges, et
**en ce que** l'amidon est réticulé avec un taux de mise en oeuvre de trimétaphosphate de sodium au moins égal à 0,5%, exprimé en matière commerciale par rapport à la matière amylacée commerciale ou **en ce que** l'amidon est réticulé avec un taux de mise en oeuvre d'agent de réticulation supérieur à 1%, exprimé en matière commerciale par rapport à la matière amylacée commerciale, et
**en ce que** l'amidon est rendu partiellement soluble par extrusion à des températures au moins égales à 100°C et à des teneurs totales en eau supérieures à 10% par rapport à l'amidon sec, et
**en ce que** l'amidon présente après broyage, dispersé dans l'eau à 20°C,
a)une solubilité, selon un test A, au plus égale à 20%, de préférence comprise entre 0,5 et 15%, de préférence encore, comprise entre 1,0% et 10%,
b)une viscosité Brookfield comprise entre 500 et 5000 mPa.s à une concentration comprise entre 10 et 20% de matières sèches (% MS), et
c)une granulométrie, mesurée sur granulomètre à diffraction laser, telle que 50 %, en volume, de ses particules ont une taille inférieure à 60 µm et au moins égale à 10 µm, de préférence une taille comprise entre 10 et 30 µm.

2. Amidon selon la revendication 1, **caractérisé en ce que** sa solubilité selon le test A est comprise entre 1,0 et 7%.

3. Amidon selon la revendication 2, **caractérisé en ce que** sa solubilité selon le test A est comprise entre 1,5 et 5%.

4. Amidon selon l'une quelconque des revendications 1 à 3, **caractérisé en ce que** sa granulométrie est telle que 50 %, en volume, de ses particules ont une taille comprise entre 11 et 25 µm.

5. Amidon selon l'une quelconque des revendications 1 à 4, **caractérisé en ce qu'**il présente en outre une granulométrie, mesurée sur granulomètre à diffraction laser, telle que 90 %, en volume, de ses particules ont une taille inférieure à 40 µm et au moins égale a 10 µm, de préférence une taille comprise entre 10 et 35 µm.

6. Amidon selon l'une quelconque des revendications 1 à 5, **caractérisé en ce qu'**il présente, par dispersion dans l'eau à température ambiante, une viscosité, Brookfield comprise entre 500 et 5000 mPa.s à une concentration comprise entre 10 et 18% MS, de préférence comprise entre 500 et 5000 mPa.s à une concentration comprise entre 11 et 16% MS, de préférence encore comprise entre 500 à 5000 mPa.s à une concentration comprise entre 12 et 15% MS.

7. Amidon selon l'une quelconque des revendications 1 à 6, **caractérisé en ce qu'**il présente en outre une viscosité sur Coupe Ford n°8 comprise entre 10 et 60 secondes, de préférence comprise entre 15 et 50 secondes, de préférence encore comprise entre 20 et 40 secondes.

8. Amidon selon l'une quelconque des revendications 1 à 7, **caractérisé en ce qu'**il est réticulé avec un phosphate, de préférence un trimétaphosphate, l'oxychlorure de phosphore, les polyacides organiques, leurs sels et anhydrides, en particulier, les adipates et les citrates, et les divers mélanges de ces composés.

9. Amidon selon la revendication 8, **caractérisé en ce qu'**il est réticulé avec du trimétaphosphate de sodium.

10. Amidon selon l'une quelconque des revendications 1 à 9, **caractérisé en ce que** le taux de mise en oeuvre de l'agent de réticulation est compris entre 1,1 et 2 %.

11. Amidon selon l'une quelconque des revendications 1 à 10, **caractérisé en ce qu'**il est issu de tubercules, de céréales ou de légumineuses, de préférence choisi parmi les amidons de céréales et, de préférence encore, choisi dans le groupe formé par les amidons de maïs, de blé, de seigle, d'orge et d'avoine.

12. Amidon selon la revendication 11, **caractérisé en ce qu'**il consiste en un amidon de maïs.

13. Amidon selon la revendication 12, **caractérisé en ce qu'**il consiste en un amidon de maïs autre qu'un amidon de maïs waxy.

14. Composition filmogène, notamment destinée au collage des sacs de petite, moyenne et grande contenance ou d'étiquettes, ou à la formulation de peintures, de vernis, de films, d'enrobages ou de revêtements (« coatings »), **caractérisée en ce qu'**elle contient au moins un amidon selon l'une quelconque des revendications 1 à 13.

15. Procédé de collage, **caractérisé en ce qu'**il comprend au moins une étape mettant en oeuvre une composition filmogène selon la revendication 14.

16. Matériau collé, en particulier, étiquette ou sac de petite, moyenne ou grande contenance, susceptible d'être obtenu par mise en oeuvre du procédé selon la revendication 15.

17. Utilisation d'un amidon selon l'une quelconque des revendications 1 à 13, pour le collage de sacs de petite, moyenne et grande contenance ou d'étiquettes, ou pour la formulation de peintures, de vernis, de films, d'enrobages ou de revêtements (« coatings »).

## Claims

1. Partially soluble crosslinked starch,
**characterized in that** it is crosslinked using a crosslinking agent selected from the group consisting of phosphorus compounds, organic acids and derivatives, and their mixtures, and
**in that** the starch is crosslinked with a level of use of sodium trimetaphosphate at least equal to 0.5%, expressed as commercial material with respect to the commercial amylaceous material, or in that the starch is crosslinked with a level of use of crosslinking agent of greater than 1%, expressed as commercial material with respect to the commercial amylaceous material, and
**in that** the starch is rendered partially soluble by extrusion at temperatures at least equal to 100°C and at total water contents of greater than 10% with respect to the dry starch, and
**in that** the starch exhibits after milling, dispersed in water at 20°C,
a) a solubility, according to a test A, at most equal to 20%, preferably of between 0.5% and 15%, more preferably of between 1.0% and 10%,
b) a Brookfield viscosity of between 500 and 5000 mPa.s at a concentration of between 10 and 20% of dry matter (% DM), and
c) a particle size, measured on a laser diffraction particle sizer, such that 50% by volume of its particles have a size of less than 60 µm and at least equal to 10 µm, preferably a size of between 10 and 30 µm.

2. Starch according to Claim 1, **characterized in that** its solubility according to the test A is between 1.0% and 7%.

3. Starch according to Claim 2, **characterized in that** its solubility according to the test A is between 1.5% and 5%.

4. Starch according to any one of Claims 1 to 3, **characterized in that** its particle size is such that 50% by volume of its particles have a size of between 11 and 25 µm.

5. Starch according to any one of Claims 1 to 4, **characterized in that** it additionally exhibits a particle size, measured on a laser diffraction particle sizer, such that 90% by volume of its particles have a size of less than 40 µm and at least equal to 10 µm, preferably a size of between 10 and 35 µm.

6. Starch according to any one of Claims 1 to 5, **characterized in that** it exhibits, by dispersion in water at ambient temperature, a Brookfield viscosity of between 500 and 5000 mPa.s at a concentration of between 10% and 18% DM, preferably of between 500 and 5000 mPa.s at a concentration of between 11% and 16% DM, more preferably of between 500 and 5000 mPa.s at a concentration of between 12% and 15% DM.

7. Starch according to any one of Claims 1 to 6, **characterized in that** it additionally exhibits a viscosity, with regard to a Ford No. 8 cup, of between 10 and 60 seconds, preferably of between 15 and 50 seconds, more preferably of between 20 and 40 seconds.

8. Starch according to any one of Claims 1 to 7, **characterized in that** it is crosslinked with a phosphate, preferably a trimetaphosphate, phosphorus oxychloride, organic polyacids, their salts and their anhydrides, in particular adipates and citrates, and the various mixtures of these compounds.

9. Starch according to Claim 8, **characterized in that** it is crosslinked with sodium trimetaphosphate.

10. Starch according to any one of Claims 1 to 9, **characterized in that** the level of use of the crosslinking agent is between 1.1% and 2%.

11. Starch according to any one of Claims 1 to 10, **characterized in that** it results from tubers, cereals or leguminous plants, is preferably chosen from cereal starches and is more preferably chosen from the group formed by maize, wheat, rye, barley and oat starches.

12. Starch according to Claim 11, **characterized in that** it consists of a maize starch.

13. Starch according to Claim 12, **characterized in that** it consists of a maize starch other than a waxy maize starch.

14. Film-forming composition intended in particular for the adhesive bonding of small, medium and large bags or of labels or for the formulation of paints, varnishes, films, coverings or coatings, **characterized in that** it comprises at least one starch according to any one of Claims 1 to 13.

15. Adhesive bonding process, **characterized in that** it comprises at least one stage employing a film-forming composition according to Claim 14.

16. Adhesively bonded material, in particular label or small, medium or large bag, obtainable by employing the process according to Claim 15.

17. Use of a starch according to any one of Claims 1 to 13, for the adhesive bonding of small, medium and large bags or of labels or for the formulation of paints, varnishes, films, coverings or coatings.

## Patentansprüche

1. Teilweise lösliche, vernetzte Stärke,
**dadurch gekennzeichnet,**
**dass** sie vernetzt wird, indem ein Vernetzungsmittel ausgewählt aus der Gruppe umfassend Phosphorverbindungen, organische Säuren und Derivate und ihre Mischungen, verwendet wird, und
**dass** die Stärke mit einem Umsetzungsanteil an Natriumtrimetaphosphat von mindestens 0,5%, ausgedrückt als handelsübliches Material bezogen auf das stärkehaltige handelsübliches Material vernetzt wird, oder dass die Stärke mit einem Umsetzungsanteil an Vernetzungsmittel von mehr als 1 %, ausgedrückt als handelsübliches Material bezogen auf das stärkehaltige handelsübliches Material vernetzt wird, und
**dass** die Stärke teilweise löslich gemacht wird durch Extrudieren bei Temperaturen von mindestens 100°C und bei Gesamt-Wassergehalten von mehr als 10% bezogen auf die trockene Stärke, und
**dass** die Stärke, die bei 20°C im Wasser dispergiert ist, nach der Zerkleinerung
a) eine Löslichkeit gemäß einem Test A von höchstens 20%, bevorzugt zwischen 0,5 und 15%, mehr bevorzugt zwischen 1,0 und 10%,
b) eine Brookfield-Viskosität zwischen 500 und 5000 mPa bei einer Konzentration, zwischen 10 und 20% Trockenmasse (% MS) und
c) so eine, im Laser-Diffraktions-Granulometer gemessene, Korngrößenbestimmung, dass 50 Volumen-% ihrer Partikel eine Größe von kleiner als 60 µm und von mindestens 10 µm, bevorzugt eine Größe zwischen 10 und 30 µm haben, aufweist.

2. Stärke nach Anspruch 1, **dadurch gekennzeichnet, dass** ihre Löslichkeit gemäß dem Test A zwischen 1,0 und 7% umfasst.

3. Stärke nach Anspruch 2, **dadurch gekennzeichnet, dass** ihre Löslichkeit gemäß dem Test A zwischen 1,5 und 5% umfasst.

4. Stärke nach einem der Ansprüche 1 bis 3, **dadurch gekennzeichnet, dass** ihre Korngrößenbestimmung so ist, dass 50 Volumen-% ihrer Partikel eine Größe zwischen 11 und 25 µm haben.

5. Stärke nach einem der Ansprüche 1 bis 4, **dadurch gekennzeichnet, dass** sie außerdem so eine, im Laser-Diffraktions-Granulometer gemessene, Korngrößenbestimmung aufweist, dass 90 Volumen-% ihrer Partikel eine Größe von kleiner als 40 µm und von mindestens 10 µm, bevorzugt eine Größe zwischen 10 und 35 µm haben.

6. Stärke nach einem der Ansprüche 1 bis 5, **dadurch gekennzeichnet, dass** sie durch Dispersion im Wasser bei Raumtemperatur eine Brookfield-Viskosität zwischen 500 und 5000 mPa bei einer Konzentration, zwischen 10 und 18% MS, bevorzugt zwischen 500 und 5000 mPa bei einer Konzentration, zwischen 11 und 16% MS und mehr bevorzugt zwischen 500 und 5000 mPa bei einer Konzentration, zwischen 12 und 15% MS aufweist.

7. Stärke nach einem der Ansprüche 1 bis 6, **dadurch gekennzeichnet, dass** sie außerdem eine Viskosität im Ford-Becher Nr. 8 zwischen 10 und 60 Sekunden, bevorzugt zwischen 15 und 50 Sekunden, mehr bevorzugt zwischen 20 und 40 Sekunden aufweist.

8. Stärke nach einem der Ansprüche 1 bis 7, **dadurch gekennzeichnet, dass** sie mit einem Phosphat, bevorzugt einem Trimetaphosphat, Phosphoroxichlorid, organischen Polysäuren, deren Salzen und Anhydriden, insbesondere den Adipaten und den Citraten, und den verschiedenen Mischungen dieser Verbindungen vernetzt wird.

9. Stärke nach Anspruch 8, **dadurch gekennzeichnet, dass** sie mit Natriumtrimetaphosphat vernetzt wird.

10. Stärke nach einem der Ansprüche 1 bis 9, **dadurch gekennzeichnet, dass** der Umsetzunganteil an Vernetzungsmittel zwischen 1,1% und 2% umfasst.

11. Stärke nach einem der Ansprüche 1 bis 10, **dadurch gekennzeichnet, dass** sie aus Knollen, Getreiden oder Hülsenfrüchten, bevorzugt ausgewählt aus Getreidestärken und mehr bevorzugt ausgewählt aus der Gruppe bestehend aus Mais-, Weizen-, Roggen-, Gersten-, und Haferstärken stammt.

12. Stärke nach Anspruch 11, **dadurch gekennzeichnet, dass** sie aus einer Maisstärke besteht.

13. Stärke nach Anspruch 12, **dadurch gekennzeichnet, dass** sie aus einer Maisstärke, die keine Stärke aus Waxy-Mais ist, besteht.

14. Filmbildende Zusammensetzung, insbesondere bestimmt für das Kleben von Tüten kleinen, mittleren und großen Fassungsvermögens oder von Etiketten oder für die Formulierung von Anstrichen, Lacken, Filmen, Überzügen oder Beschichtungen ("Coatings"), **dadurch gekennzeichnet, dass** sie mindestens eine Stärke nach einem der Ansprüche 1 bis 13 enthält.

15. Klebeverfahren, **dadurch gekennzeichnet, dass** es mindestens einen Schritt umfasst, in dem eine filmbildende Zusammensetzung nach Anspruch 14 verwendet wird.

16. Geklebtes Material, insbesondere Etikette oder Tüte kleinen, mittleren und großen Fassungsvermögens, erhältlich, indem das Verfahren nach Anspruch 15 verwendet wird.

17. Verwendung einer Stärke nach einem der Ansprüche 1 bis 13 für das Kleben von Tüten kleinen, mittleren und großen Fassungsvermögens oder von Etiketten oder für die Formulierung von Anstrichen, Lacken, Filmen, Überzügen oder Beschichtungen ("Coatings").
